# FASCICULE DE BREVET EUROPEEN

(11) **EP 3 612 016 B1**
(45) Date de publication et mention de la délivrance du brevet: **03.08.2022**
(21) Numéro de dépôt: 18719985.6
(22) Date de dépôt: 17.04.2018
(51) Int. Cl.: A01D 89/00

(54) **DISPOSITIF AÉRATEUR D'ANDAIN ET MACHINE AGRICOLE ÉQUIPÉE D'UN TEL DISPOSITIF**
SCHWADBELÜFTERVORRICHTUNG UND MIT SOLCH EINER VORRICHTUNG AUSGESTATTETE LANDWIRTSCHAFTLICHE MASCHINE
SWATH AERATOR DEVICE AND AGRICULTURAL MACHINE EQUIPPED WITH SUCH A DEVICE

(30) Priorité: 18.04.2017 FR 1753355
(43) Date de publication de la demande: 26.02.2020
(73) Titulaire: Kuhn SAS, 67700 Saverne (FR)
(72) Inventeur: SPEICH, Cédric, 67270 Altekendorf (FR); COTTET, Victor, 70200 Malbouhans (FR)
(74) Mandataire: Esch, Esther Evelyne
(86) Numéro de dépôt international: PCT/FR2018/050957
(87) Numéro de publication internationale: WO 2018/193200

(56) Documents cités:
- DE-A1- 2 757 328
- US-A- 491 641
- US-A- 3 512 348

## Description

La présente invention se rapporte au domaine technique général du machinisme agricole et en particulier au domaine des machines de récolte. L'invention concerne un dispositif d'entrainement de végétaux tels que de l'herbe, de la paille ou du foin, destiné à être monté sur une machine agricole comprenant notamment :
- un tambour qui est articulé avec un bâti autour d'un premier axe sensiblement horizontal et qui comprend une enveloppe sensiblement cylindrique qui présente des ouvertures par lesquelles, des moyens de saisie destinés à entrainer des végétaux situés à l'extérieur de l'enveloppe sont aptes à saillir,
- un rotor sur lequel sont rigidement fixés les moyens de saisie et apte à être entrainé en rotation par rapport au bâti autour d'un deuxième axe dirigé sensiblement parallèlement au premier axe et distinct de celui-ci, où, lors du fonctionnement du dispositif, le deuxième axe est fixe par rapport au premier axe,
- et des moyens de transmissions du mouvement de rotation.

L'invention porte également sur une machine agricole de récolte comportant un tel dispositif d'entrainement des végétaux.

Le document FR2792496 propose un dispositif d'entrainement de végétaux de ce type : lorsque le dispositif est en fonctionnement, le rotor et l'enveloppe sont animés en rotation, et les moyens de saisie, constitués par des dents, prélèvent les végétaux au niveau du sol, les soulèvent et les projettent vers l'arrière par-dessus le dispositif. Lorsque le dispositif est en fonctionnement, le rotor et l'enveloppe effectuent des révolutions autour d'axes respectifs à vitesses de rotation égales, et dans le même sens de rotation. Dans la machine décrite dans le document FR2792496, les moyens de transmission du mouvement de rotation sont réalisés par des pignons, des couronnes dentées et des chaines. Ce type d'entrainement présente un encombrement important et nécessite un nombre important de pièces, ce qui implique un montage et une maintenance complexes et onéreux. Il nécessite de plus un entretien régulier et difficile à mettre en œuvre du fait de la difficulté d'accès aux moyens de transmission du mouvement.

Chacun des documents US 3 512 348 et US 491 641 divulgue également un dispositif d'entrainement de végétaux comprenant une enveloppe articulée au bâti et un rotor sur lequel sont articulés des moyens de saisie. Chacun de ces dispositifs divulgue un dispositif dont les moyens de saisie sont articulés avec le rotor, ce qui implique un assemblage long et complexe, ainsi que davantage d'usure et d'entretien.

La présente invention a pour but de pallier à au moins certains des inconvénients de l'état de la technique exposé ci-dessus.

Un objectif de la présente invention est ainsi de proposer un dispositif d'entrainement de végétaux simple à mettre en œuvre. A cet effet, l'invention a pour objet un dispositif du type évoqué ci-dessus qui est caractérisé en ce que les moyens de transmission du mouvement de rotation comprennent au moins une bielle articulée à l'enveloppe d'une part et au rotor d'autre part. Ce type de transmission du mouvement présente l'avantage d'être composé de pièces peu onéreuses et ne nécessitant que peu d'entretien.

D'autres caractéristiques et avantages de l'invention se dégageront de la description ci-après et des exemples de réalisation donnés à titre d'exemple non limitatif et expliqué avec référence aux dessins schématiques annexés dans lesquels :
- la figure 1 est une vue de dessus d'une machine agricole de récolte, plus précisément un andaineur, comportant un dispositif d'entrainement selon l'invention, où la machine est attelée à un tracteur,
- la figure 2 est une vue en coupe du dispositif d'entrainement, depuis le dessus, où des supports et des fourches sont occultés pour une meilleure compréhension,
- la figure 3 est une vue partielle en perspective du dispositif d'entrainement, dans laquelle certaines pièces ont été occultées pour une meilleure compréhension, notamment certaines fourches et tôles de l'enveloppe,
- la figure 4 est une vue de côté en coupe du dispositif d'entrainement de végétaux, où sont illustrés deux modes de réalisation,
- la figure 5 est une vue en perspective de la partie avant du dispositif d'entrainement de végétaux,
- la figure 6 est une vue de côté du dispositif, où l'axe de rotation du rotor est approché du sol par rotation autour de l'axe de rotation de l'enveloppe,
- la figure 7 est une vue partielle de derrière, en coupe, d'un exemple de connexion du dispositif à une source d'entrainement en rotation,
- la figure 8 est un détail d'une vue en coupe en perspective du dispositif d'entrainement, où des fourches ont été occultées pour une meilleure compréhension,
- la figure 9 est une vue de côté en coupe du dispositif d'entrainement selon un mode de réalisation alternatif, avec possibilité de faire pivoter le rotor autour du premier axe, où certaines parties ont été occultées pour une meilleure compréhension, notamment des fourches et leur support, un flasque latéral et les moyens d'entrainement,
- la figure 10 est une vue similaire à celle de la figure 4 selon un deuxième mode de réalisation,
- la figure 11 est une vue en perspective d'un dispositif d'entrainement selon le deuxième mode de réalisation,
- la figure 12 est une vue similaire à celle de la figure 5 selon un troisième mode de réalisation,
- la figure 13 est une vue de dessus d'un dispositif dont la source d'entrainement est un moteur situé à l'arrière du dispositif,
- la figure 14 est une vue latérale en coupe partielle d'une machine agricole de récolte dotée d'un dispositif d'entrainement et d'un convoyeur transversal à l'arrière du dispositif d'entrainement, où la machine est attelée à un tracteur.

Dans l'intégralité du présent document, les notions d'avant, d'arrière et de latéralité sont définies en se plaçant à l'arrière de la machine et en regardant dans une direction d'avance A.

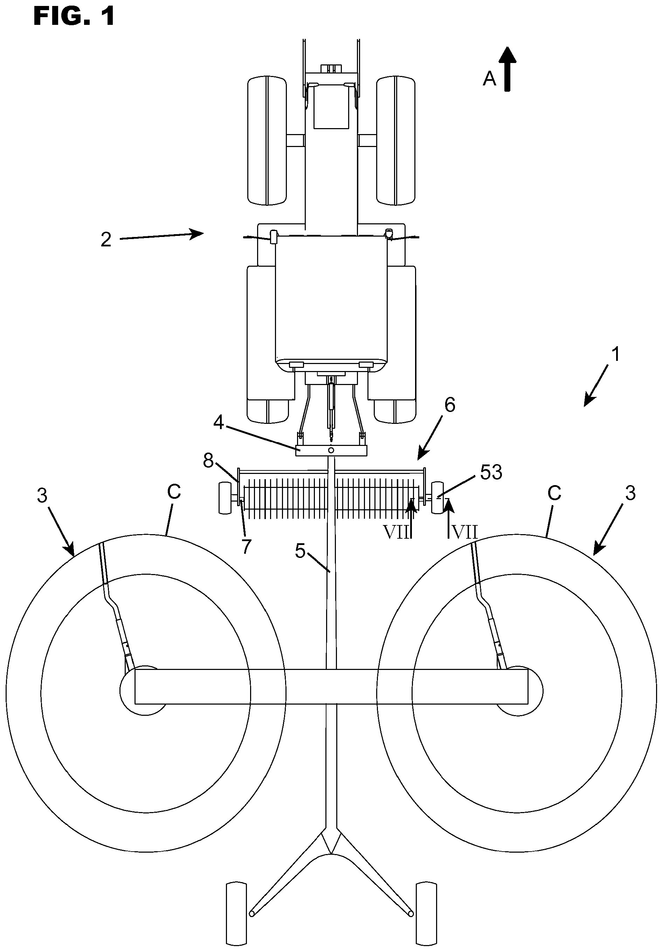

La figure 1 représente une machine (1) agricole attelée à un tracteur (2), ou engin agricole similaire, permettant de la déplacer dans la direction d'avance (A) dans laquelle la machine (1) est configurée pour travailler. La machine (1) de récolte est représentée sous la forme d'un andaineur à dépose centrale, où des roues râteleuses (3) sont entrainées en rotation autour d'arbres sensiblement verticaux de sorte à ce qu'elles convergent à l'avant. Les roues râteleuses (3) permettent de rassembler des végétaux, de préférence à brin tels que de l'herbe, coupés et gisant au sol (B), en un andain situé au centre de la machine (1). Un dispositif (6) d'entrainement de végétaux est monté sur la machine (1) entre le tracteur (2) et les roues râteleuses (3). Dans ce cas, il a pour rôle de prélever des végétaux gisant au sol (B) et de projeter ceux-ci vers l'arrière et vers le haut afin de modifier leur répartition. Ainsi, les végétaux préalablement en contact avec le sol (B) n'auront pas tendance à adhérer au sol (B) par suite d'un long contact avec celui-ci. Le séchage sera alors plus uniforme. Le dispositif (6) est donc positionné de manière à travailler les végétaux situés sur une bande qui n'a pas été ratissée par les roues râteleuses (3). Cette bande est longitudinale à la direction de l'avance (A) et centrée entre les trajectoires (C) de chaque roue râteleuse (3). La machine (1) comporte par ailleurs un châssis (5) doté d'une structure d'attelage (4) permettant de la relier à un tracteur (2) ou analogue. Le bâti (8) du dispositif (6) est monté sur ledit châssis (5). Le dispositif (6) est quant à lui monté sur le bâti (8) par l'intermédiaire d'un arbre porteur (7). L'arbre porteur (7) est rigidement fixé par rapport audit bâti (8). Dans une alternative non représentée, le dispositif (6) est monté sur une machine (1) attelée à l'avant du tracteur (2), ce qui permet d'éviter au tracteur (2) d'écraser les végétaux au sol (B) avant de les prélever, et ainsi de prévenir encore plus le risque d'adhérence des végétaux avec le sol (B). Lorsque la machine (1) est attelée à l'arrière du tracteur (2), la structure d'attelage (4) est disposée à l'extrémité avant du châssis (5).

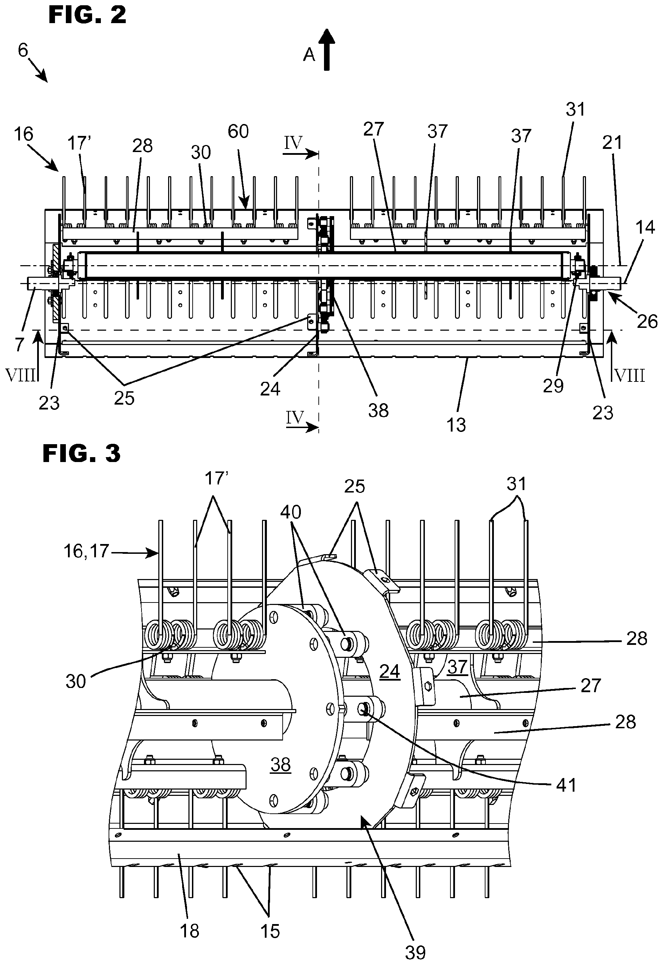

Comme il est représenté sur la figure 2, le dispositif (6) d'entrainement de végétaux est destiné à être assemblé sur une machine (1) agricole et comprend notamment un tambour (60) qui est articulé avec le bâti (8) autour d'un premier axe (14) sensiblement horizontal. Ce tambour (60) comprend une enveloppe (13). Le tambour (60) est guidé en rotation autour de l'arbre porteur (7). L'arbre porteur (7) est positionné de sorte que son axe soit confondu avec un premier axe (14), qui est sensiblement horizontal, ou sensiblement parallèle au sol (B), et sensiblement perpendiculaire à la direction de l'avance (A). Lors du fonctionnement, le tambour (60) est ainsi animé en rotation autour du premier axe (14). L'enveloppe (13) est ainsi articulée avec le bâti (8) autour du premier axe (14). L'enveloppe (13) est sensiblement en forme de cylindre droit. Le tambour (60) comporte également l'arbre porteur (7).

Le dispositif (6) d'entrainement comprend d'autre part un rotor (26) principalement constitué d'un arbre central (27) et de supports (28) sur lesquels sont fixées des moyens de saisie (16) destinés à entrainer des végétaux situés à l'extérieur de l'enveloppe (13).

Lors du fonctionnement du dispositif (6), l'arbre central (27) est maintenu fixe en translation par rapport à l'arbre porteur (7) par au moins un bras support (29). Le bras support (29) est rigidement fixé à l'arbre porteur (7), par exemple par soudage. L'arbre central (27) est guidé en rotation autour d'un deuxième axe (21) dirigé sensiblement parallèlement au premier axe (14) et distinct de celui-ci. Ce guidage en rotation de l'arbre central (27) est assuré par au moins un roulement à billes monté entre le au moins un bras support (29) et l'arbre central (27). Il ressort ainsi que, lors du fonctionnement du dispositif (6), le deuxième axe (21) est fixe par rapport au premier axe (14). Le rotor (26) est apte à être entrainé en rotation autour du deuxième axe (21) par rapport au bâti (8). Le deuxième axe (21) est situé à l'intérieur de l'enveloppe (13), du moins en partie. De préférence, l'arbre central (27) est inclus entièrement dans le cylindre formé par l'enveloppe (13).

L'enveloppe (13) permet entre autre de dévier et guider les végétaux prélevés par le dispositif (6) afin d'éviter qu'ils ne s'enroulent autour du rotor (26). Aussi, peut-on la désigner comme enveloppe (13) de guidage ou déflectrice. Ce phénomène d'enroulement de végétaux autour du rotor (26), qui peut avoir pour effet d'entraver sa rotation, voire de le bloquer, se produit d'autant moins que l'enveloppe (13) est entrainée en rotation.

L'enveloppe (13) présente par ailleurs des ouvertures (15), par lesquelles les moyens de saisie (16) sont aptes à saillir de manière à ce qu'ils soient en mesure d'entrainer des végétaux situés à l'extérieur de l'enveloppe (13). Il est ainsi entendu, que les moyens de saisie (16) peuvent également être immergés dans l'enveloppe (13), autrement dit être contenu entièrement dans celle-ci.

Le dispositif (6) d'entrainement de végétaux comprend en outre des moyens de transmission (39) du mouvement de rotation, à savoir le mouvement de rotation entre le tambour (60) et le rotor (26). Une caractéristique importante du dispositif (6) réside en ce que les moyens de transmission (39) du mouvement de rotation comprennent au moins une bielle (40) articulée au tambour (60) d'une part et articulée au rotor (26) d'autre part. La ou chaque bielle (40) est de préférence directement articulée avec le rotor (26). La ou chaque bielle (40) est également de préférence articulée directement avec le tambour (60). La vitesse de rotation du tambour (60) est ainsi égale à la vitesse de rotation du rotor (26).

Ce type d'entrainement présente l'avantage d'être simple à réaliser et particulièrement économique. Il permet également d'éviter un entretien fréquent comme cela peut s'avérer nécessaire pour des moyens de transmission faisant intervenir des chaines. Cet avantage est également obtenu grâce au fait que le dispositif (6) d'entrainement de végétaux est dépourvu de came. D'autre part, l'utilisation d'au moins une bielle (40) comme moyen de transmission (39) autorise avantageusement de choisir une valeur d'entraxe (E) relativement courte, tout en limitant l'encombrement des moyens de transmission (39). L'entraxe (E) désigne la distance séparant le premier axe (14) du deuxième axe (21).

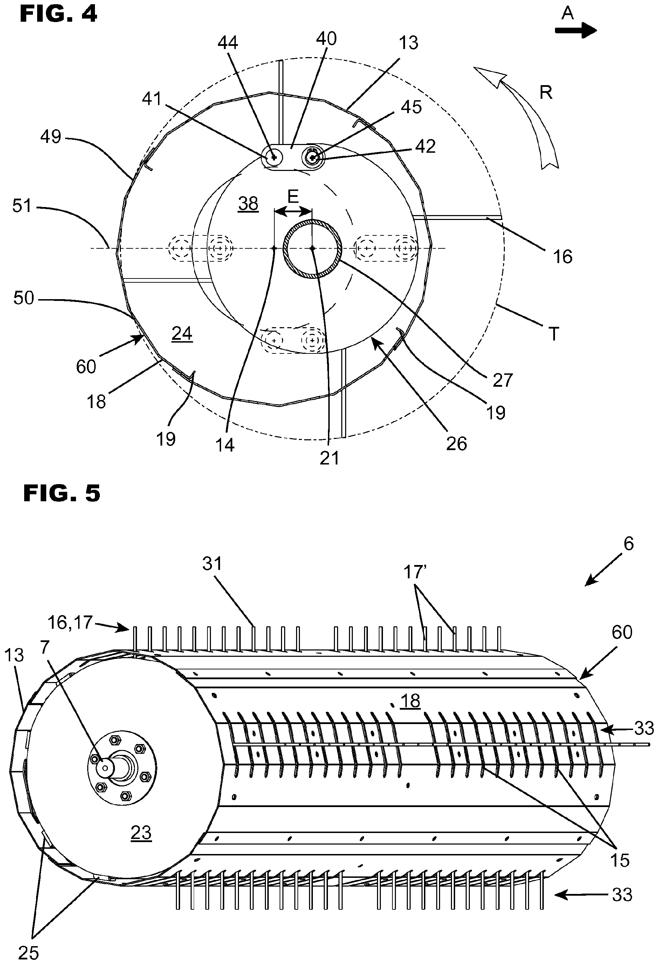

Tel qu'ils sont représentés sur les figures 3 et 4, les moyens de transmission (39) comprennent également au moins un pivot menant (41) rigidement fixé à l'enveloppe (13) et au moins un pivot mené (42) rigidement fixé au rotor (26). Le ou chaque pivot menant (41) est fixé sur le tambour (60), préférentiellement rigidement. De même, le ou chaque pivot mené (42) est fixé sur le rotor (26), préférentiellement rigidement.

Les pivots (41,42) ont pour rôle de transmettre le mouvement rotatif entre le tambour (60) et le rotor (26). Leur fabrication, leur fixation avec l'enveloppe (13) et leur assemblage avec la ou chaque bielle (40) ne présentant aucune difficulté particulière, ils participent ainsi avantageusement à la mise en œuvre rudimentaire des moyens de transmission (39).

Dans un mode de réalisation préféré, les moyens de transmission (39) comprennent une pluralité de bielles (40) articulées au tambour (60) d'une part et articulées au rotor (26) d'autre part. Une telle réalisation permet un entrainement en continu, sans à-coups. Cela permet en outre de mieux répartir les efforts de transmission. En effet, plus le nombre de bielles (40) est élevé, moindre sera l'effort à transmettre par bielle (40). Les moyens de transmission (39) comprennent alors également une pluralité de pivots menant (41) et de pivots menés (42). De préférence, toutes les bielles (40) sont identiques. De préférence, tous les pivots (41,42) sont respectivement identiques.

Afin de réduire le temps d'assemblage et le coût de revient du dispositif (6), il est envisageable que les moyens de transmission (39) comprennent un nombre quelconque de bielle(s) (40). Ils peuvent ainsi par exemple comprendre une seule bielle (40), ainsi que représenté en traits pleins sur la figure 4. Dans un autre mode de réalisation, les moyens de transmission (39) comportent trois bielles (40), représentées sur cette même figure 4 en pointillés, en sus de l'unique bielle (40) représentée en traits pleins, ce qui amène donc à quatre le nombre total de bielles (40) qui peut être pair ou impair. Tels que représentés sur les figures 2 et 3, les moyens de transmission (39) comptent au moins cinq bielles (40), et de préférence huit. Chaque pivot menant (41) et pivot mené (42) étant associés à une seule bielle (40), on compterait dans ce cas préférentiel huit pivots menant (41) et huit pivots menés (42). Toutes les bielles (40) sont de préférence positionnées dans un même plan sensiblement vertical ou perpendiculaire au premier axe (14). De préférence, les bielles (40) sont régulièrement réparties radialement autour du premier axe (14), chaque bielle (40) appliquant alors un effort de transmission sensiblement égal entre le rotor (26) et le tambour (60). Telle que représentée sur la figure 4, chaque bielle (40) est montée libre en rotation avec le pivot menant (41) autour d'un troisième axe (44) sensiblement parallèle au premier axe (14). Chaque bielle (40) est également montée libre en rotation avec le pivot mené (42) autour d'un quatrième axe (45) sensiblement parallèle au deuxième axe (21). Le dispositif (6) d'entrainement est caractérisé en ce que la ou chaque bielle (40) est articulée avec le tambour (60), autour du troisième axe (44) sensiblement parallèle au premier axe (14). Chaque bielle (40) est articulée avec le rotor (26) autour du quatrième axe (45) sensiblement parallèle au deuxième axe (21). Les moyens de transmission (39) se distinguent donc notamment par ce guidage en rotation de chaque bielle (40) qui leur confère une facilité singulière de fabrication et d'assemblage. Chaque bielle (40) fonctionne ainsi comme un tirant, respectivement un poussant, qui s'oriente selon la direction du plan passant par les troisièmes et quatrièmes axes (43, 44) de la bielle considérée.

On peut noter que chaque troisième axe (44) est associé à une bielle (40). Réciproquement, chaque bielle (40) est associée à un troisième axe (44). De la même manière, chaque quatrième axe (45) est associé à une bielle (40) ; et réciproquement, chaque bielle (40) est associée à un quatrième axe (45). De préférence, dans une vue selon le première axe (14), les troisièmes axes (44) sont régulièrement répartis autour du premier axe (14).

Dans un mode de réalisation alternatif, les pivots menant (41) peuvent pivoter par rapport au tambour (60). Dans ce cas, les pivots menant (41) pivotent autour du troisième axe (44). Les pivots menés (42) pourraient tout aussi bien pivoter par rapport au rotor (26), auquel cas, les pivots menés (42) pivotent autour du troisième axe (45).

Pour simplifier le dispositif (6) et uniformiser les moyens de transmission (39), le dispositif (6) est également caractérisé en ce que le premier axe (14) est situé à égale distance de chaque troisième axe (44). Le deuxième axe (21) est situé à égale distance de chaque quatrième axe (45).

Selon une autre caractéristique importante du dispositif (6), la distance entre le troisième axe (44) d'une bielle (40) et le quatrième axe (45) de la même bielle (40) est égale à la distance séparant le premier axe (14) du deuxième axe (21). Une telle réalisation évite avantageusement de devoir faire coulisser un des pivot mené (42) ou pivot menant (41) par rapport à la bielle (40) considérée. Cette caractéristique permet avantageusement d'éviter une usure prématurée de la ou de chaque bielle (40) et des pivots (41,42). Cela permet par ailleurs de répartir les efforts entre les différentes bielles, le cas échéant. La ou chaque bielle (40) fonctionne ainsi comme un tirant transmettant un effort de transmission, successivement un effort de traction et de compression, et qui s'oriente parallèlement au plan (51) passant par le premier axe (14) et le deuxième axe (21). Vu que le premier axe (14) est situé à égale distance de chaque troisième axe (44) et que le deuxième axe (21) est situé à égale distance de chaque quatrième axe (45), il reviendrait au même de souligner que la distance séparant le troisième axe (44) du premier axe (14) est égale à la distance séparant le quatrième axe (45) du deuxième axe (21). Une conséquence est que, lors du fonctionnement, les bielles (40) sont constamment parallèles entre elles.

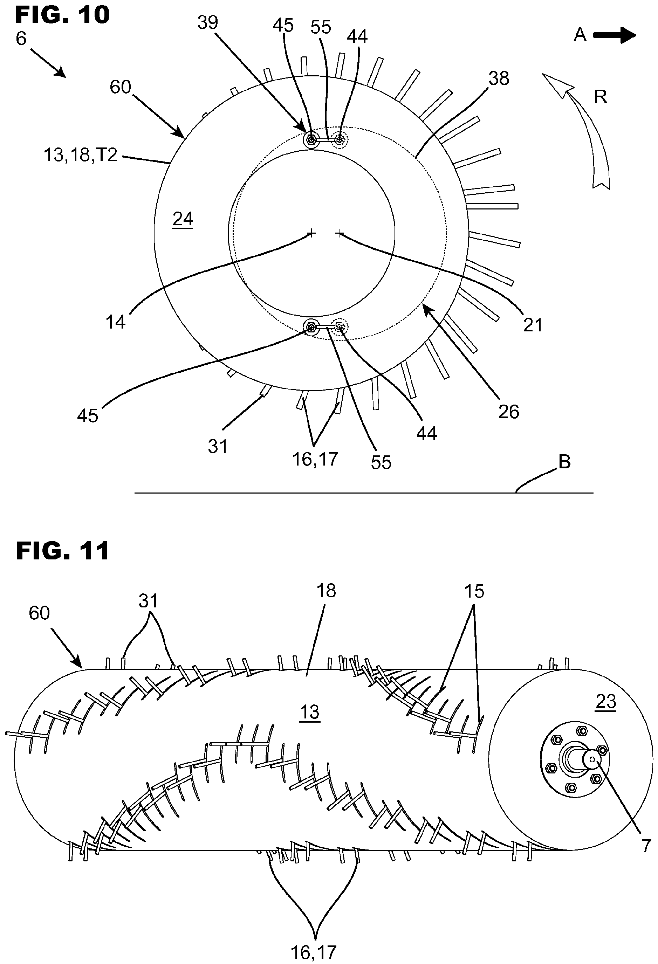

Comme il ressort de la figure 10, la ou chaque bielle (40) pourrait également être réalisée sous la forme d'un élément de traction (55) tel qu'un câble ou une chaîne à maillons... etc. L'élément de traction (55) est souple en compression et ne peut transmettre d'effort lorsque le troisième axe (44) est approché du quatrième axe (45). Lorsque le dispositif (6) n'est pas animé en rotation, l'élément de traction (55) est détendu. Lors du fonctionnement du dispositif (6), l'éloignement du troisième axe (44) par rapport au quatrième axe (45) tend l'élément de traction (55) qui transmet alors la traction, respectivement le mouvement de rotation, entre le rotor (26) et le tambour (60).

Dans le cas d'un nombre pair de bielles (40), les moyens de transmissions (39) comptent alors préférentiellement au moins deux troisièmes axes (44) diamétralement opposées, ou sensiblement, par rapport au premier axe (14).

L'encombrement radial du rotor (26) est tel qu'il est contenu dans le volume de l'enveloppe (13). En sus, le rotor (26) est dimensionné de manière à ce que, au cours de sa révolution autour du deuxième axe (21), la totalité du rotor (26) reste contenu dans l'enveloppe (13).

Cela se caractérise géométriquement en ce que la distance minimale entre l'enveloppe (13) et le premier axe (14) est inférieure à la somme de l'entraxe (E) avec la distance séparant le deuxième axe (21) du quatrième axe (45). Pratiquement, cela se traduit par le fait que la distance minimale entre l'enveloppe (13) et son axe de rotation, à savoir le premier axe (14), est inférieure à la somme de l'entraxe (E) et du rayon du disque (38). Un tel encombrement du rotor (26) permet de réduire l'encombrement total du dispositif (6). Cela permet notamment d'animer en rotation un dispositif (6) doté d'une enveloppe (13) dont la trajectoire extérieure (T2) forme, dans une vue selon le premier axe (14), un cercle d'un diamètre inférieur à 350 millimètres, plus précisément compris entre 300 et 315 millimètres.

Sur le rotor (26) sont fixés les moyens de saisie (16) destinés à entrainer des végétaux se situant à l'extérieur de l'enveloppe (13). Les moyens de saisie (16) sont rigidement fixés au rotor (26). On entend dans la présente description par 'rigidement fixé', une liaison mécanique n'autorisant aucun degré de liberté. Le mouvement des moyens de saisie (16) est ainsi identique à celui du rotor (26). Chaque moyen de saisie (16) présente une base (30) fixée au rotor (26), ainsi qu'une extrémité (31) apte à saillir de l'enveloppe (13).

Ainsi que représenté sur les figures 2 à 9, les moyens de saisie (16) peuvent être constitués par une multitude de fourches (17) de type connu de l'état de la technique. Chaque fourche (17) est conçue par une tige métallique plus ou moins rigide, de section préférablement sensiblement circulaire. La base (30) de chaque fourche (17) forme des spires. Aux extrémités des spires selon une vue longitudinale au deuxième axe (21), débute une portion sensiblement rectiligne s'étendant dans un plan perpendiculaire au deuxième axe (21) formant une dent (17') ou un doigt qui se termine par l'extrémité (31). Chaque fourche (17) comporte ainsi au moins une dent (17'), préférentiellement deux dents (17'). Les spires permettent avantageusement aux dents (17') de se déformer dans le cas où elles rencontrent un obstacle. Les deux dents (17') d'une fourche (17) sont de préférence parallèles entre elles. En sus des spires, la base (30) présente une boucle autorisant une fixation standard et solide d'une fourche (17) avec le rotor (26), plus précisément sur un support (28), par un moyen de fixation tel qu'une vis.

Etant donné que les moyens de saisie (16) sont fixés rigidement avec le rotor (26), quels que soient les deux moyens de saisies (16) considérés, l'angle entre ces deux moyens de saisie (16) est constant en projection sur un plan perpendiculaire au deuxième axe (21). On entend par là que cet angle reste inchangé au cours de la révolution du rotor (26). Il est entendu qu'une déformation des moyens de saisies (16) n'est pas prise en compte pour la mesure de l'angle entre deux moyens de saisie (16).

Etant donné que les moyens de saisie (16) sont rigidement fixés sur le rotor (26), ils peuvent être répartis de n'importe quelle manière que ce soit sur la circonférence de l'enveloppe (13). Ainsi que représentés sur les figures 2 à 9, les moyens de saisie (16) forment des rangs (33). Le dispositif (6) peut compter un quelconque nombre de rang (33). De préférence, en vue de côté, les moyens de saisie (16) sont angulairement répartis autour du deuxième axe (21) de manière régulière, de sorte de pouvoir entrainer les végétaux à un rythme régulier. Dans l'exemple représenté sur les figures 2 à 9, le dispositif (6) d'entrainement compte quatre rangs (33) de fourches (17) qui sont par conséquent décalés de 90° l'un par rapport à l'autre autour du deuxième axe (21). Dans l'exemple de réalisation illustré sur les figures 2 à 9, les dents (17') sont sensiblement coplanaires dans un même rang (33). Dans un rang (33), les fourches (17) sont disposées à intervalles réguliers. Dans un même rang (33), les fourches (17) sont disposées préférentiellement de sorte que les dents (17') soient espacées à intervalles réguliers.

L'encombrement des moyens de transmission (39) mesuré longitudinalement au premier axe (14) est tel que les moyens de transmission (39) peuvent être intégrés entre deux plans perpendiculaires au premier axe (14) et dont l'écartement entre ces deux plans est inférieur à l'écartement entre deux moyens de saisie (16) mesuré longitudinalement au premier axe (14). Les végétaux gisant au sol (B) peuvent donc être prélevés uniformément sur toute la largeur de travail du dispositif (6), ce même si les moyens de transmission (39) sont intégrés sur ladite largeur de travail.

Il est cependant possible, pour des raisons d'encombrement, que l'intervalle entre les fourches (17) centrales soit différent des autres.

Le dispositif (6) peut être transféré entre une configuration de travail et une configuration de transport et/ou de manœuvre. Dans la configuration de manœuvre, le dispositif (6) est éloigné du sol (B). Dans la configuration de transport, la distance entre le dispositif (6) et le sol (B) est plus importante qu'en configuration de travail. Il est en outre possible que, dans la configuration de transport, le dispositif (6) ait subit une rotation afin de rendre la machine (1) plus compacte.

Dans le mode de réalisation représenté sur les figures 2 et 5, l'écart entre les moyens de saisie (16), respectivement les fourches (17), situés au niveau du châssis (5) est tel qu'il permet d'approcher l'enveloppe (13) au plus prêt du châssis (5) en configuration de transport et/ou de manœuvre. Ainsi, il est possible d'atteindre une garde au sol - la distance entre le dispositif (6) et le sol (B) - plus importante dans ces configurations. A cette même fin, le châssis (5) pourrait également être doté d'un décrochement vers le haut à l'emplacement du dispositif (6).

Afin d'améliorer l'efficacité du prélèvement de végétaux gisant au sol (B), les fourches (17) d'un rang (33) peuvent être décalées longitudinalement au premier axe (14) par rapport aux fourches (17) des autres rangs (33). Comme il est représenté sur les figures 10 à 12, les moyens de saisies (16), respectivement les fourches (17), peuvent, en vue de dessus du dispositif (6), former des chevrons ou des V afin d'homogénéiser la quantité de végétaux projetés par lesdits moyens de saisies (16).

Les dents (17') sont sensiblement orientées selon un rayon du rotor (26). Ce type de moyen de saisie (16) a pour avantage d'être constitué de composants standards et peu coûteux, de réaliser un entrainement uniforme et de prélever uniformément les végétaux gisant au sol (B).

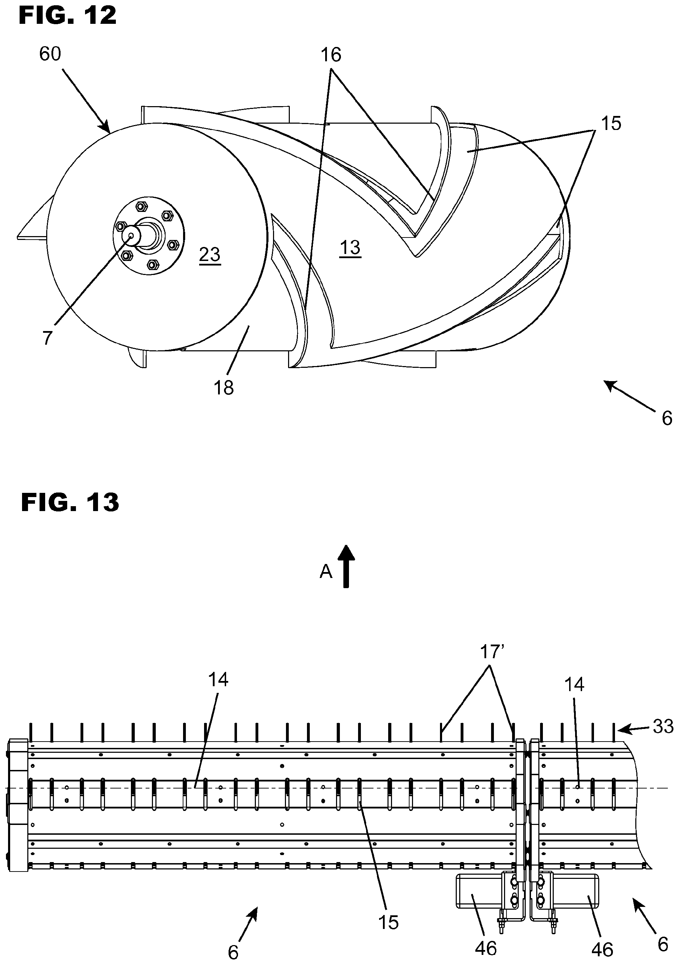

De manière alternative, les moyens de saisie (16) peuvent être constitués de dents (17') présentant une ou plusieurs courbure(s) ou pli(s). Ces dents (17') peuvent aussi par exemple être isolément fixées avec le rotor (26), être diamétrales et/ou de section polygonale. Ainsi qu'il est visible sur la figure 12, il est également possible que les moyens de saisie (16) soient constitués par des parois telle que des toiles, brosses ou plaques, flexibles ou non, qui seraient montées en lieu et place de plusieurs fourches (17).

Les ouvertures (15) pratiquées dans l'enveloppe (13) permettent aux moyens de saisie (16) de la traverser afin que ces derniers soient en mesure d'entrainer les végétaux situés à l'extérieur de l'enveloppe (13). De préférence, les ouvertures (15) sont de telles dimensions que les moyens de saisie (16) n'entrent pas en contact avec l'enveloppe (13) lors du fonctionnement normal du dispositif (6). Une telle caractéristique présente l'avantage de ne pas user prématurément les moyens de saisie (16) et/ou la paroi des ouvertures (15). Les ouvertures (15) sont telles qu'elles permettent à chaque moyen de saisie (16) d'osciller entre deux positions extrêmes par rapport à l'enveloppe (13). Ces deux positions sont conférées aux moyens de saisie (16) par la rotation du rotor (26) et déterminées entre autre par la valeur de l'entraxe (E).

La vitesse de rotation de l'enveloppe (13) étant égale à celle des moyens de saisie (16), chaque ouverture (15) est associée à un moyen de saisie (16). Réciproquement, à chaque moyen de saisie (16) est associée une ouverture (15). Dans le mode de réalisation illustré sur les figures 5, 8 et 11 notamment, chaque dent (17') est associée à une ouverture (15), et chaque ouverture (15) est associée à une dent (17') de fourche (17) de sorte que le l'enveloppe (13) ne présente aucun autre orifice, limitant la surface par laquelle des végétaux pourraient s'introduire à l'intérieur de l'enveloppe (13). Dans ce mode de réalisation, les ouvertures (15) sont formées dans l'enveloppe (13) de telle manière que leur dimension longitudinale s'étende dans un plan sensiblement vertical et sensiblement perpendiculaire au deuxième axe (21). Chaque ouverture (15) présente une largeur légèrement supérieure à la largeur - ou diamètre - de la dent (17') de fourche (17) à laquelle elle est associée. Les ouvertures ne sont ainsi pas périphériques à l'instar de dispositif (6) d'entrainement équipé de déflecteurs ou « strippers ». La taille de chaque ouverture (15) est ainsi avantageusement réduite de manière à éviter l'intrusion de végétaux à l'intérieur de l'enveloppe (13). En outre, la limitation de la dimension de chaque ouverture (15) parallèlement à la direction de l'avance (A) évite avantageusement qu'un moyen de saisie (16) ne rentre entièrement dans l'enveloppe (13) suite à une déformation importante due à la rencontre avec un obstacle.

Selon une alternative représentée figure 12, la dimension longitudinale des ouvertures (15) s'étend transversalement à la direction de l'avance (A). Chaque ouverture (15) peut laisser passer plusieurs moyens de saisie (16). Une telle réalisation permet d'alléger l'enveloppe (13) et de faciliter l'accès aux composants situés à l'intérieur.

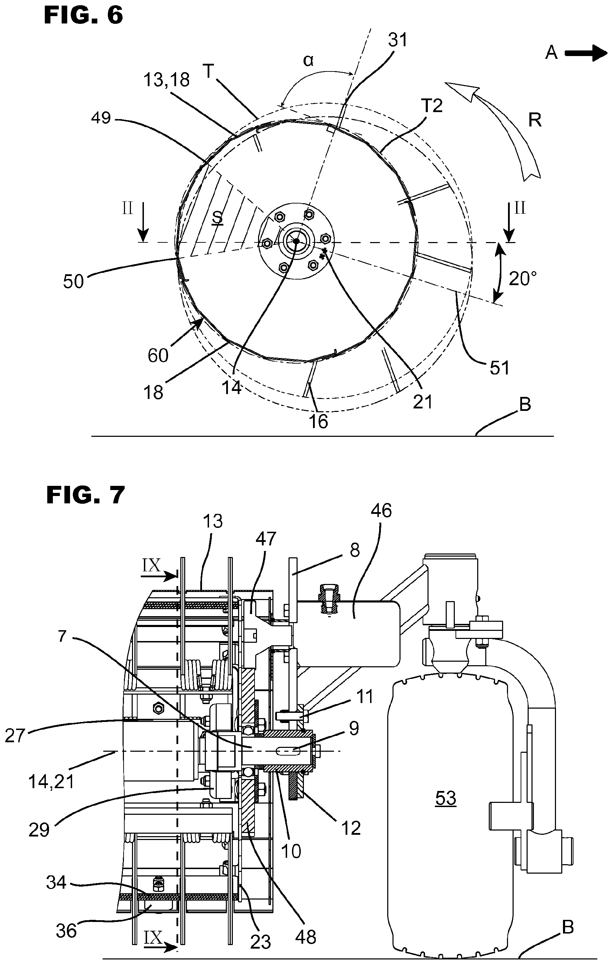

Le dispositif (6) est mis en fonctionnement lorsque le rotor (26) est entrainé en rotation par une source d'entrainement (46). Selon le mode de réalisation représenté sur la figure 7, le tambour (60) entraine le rotor (26) à sa suite. Il se dégage cependant de la présente description que les moyens de transmission (39) du mouvement de rotation permettent la transmission de la rotation du rotor (26) au tambour (60) et vice-versa. Ainsi, une caractéristique importante du dispositif (6) est qu'il peut être agencé de sorte que le tambour (60) entraine le rotor (26) ou inversement.

Ainsi qu'illustre la figure 7, le rotor (26) est entrainé en rotation par un moteur fixé par rapport au bâti (8), qui peut par exemple être électrique ou hydraulique. Sur l'arbre du moteur est fixé un pignon (47) qui engraine avec une roue dentée (48) fixée avec le tambour (60), par l'intermédiaire de moyen de fixation. Toutefois, il serait aussi possible de faire fonctionner le dispositif (6) par le biais d'une source d'entrainement (46) réalisée par un renvoi d'angle qui serait assemblé en lieu et place du moteur et relié à la prise de force d'un tracteur (2) par un arbre télescopique à cardans. Ainsi qu'il est représenté sur la figure 7, chaque extrémité de l'enveloppe (13) peut être obstruée par un couvercle permettant d'éviter que des végétaux ne s'enroulent autour de l'arbre porteur (7). A cette même fin, il peut également être prévu une entretoise fixée à ce couvercle et entourant l'arbre du moteur fixé au pignon (47).

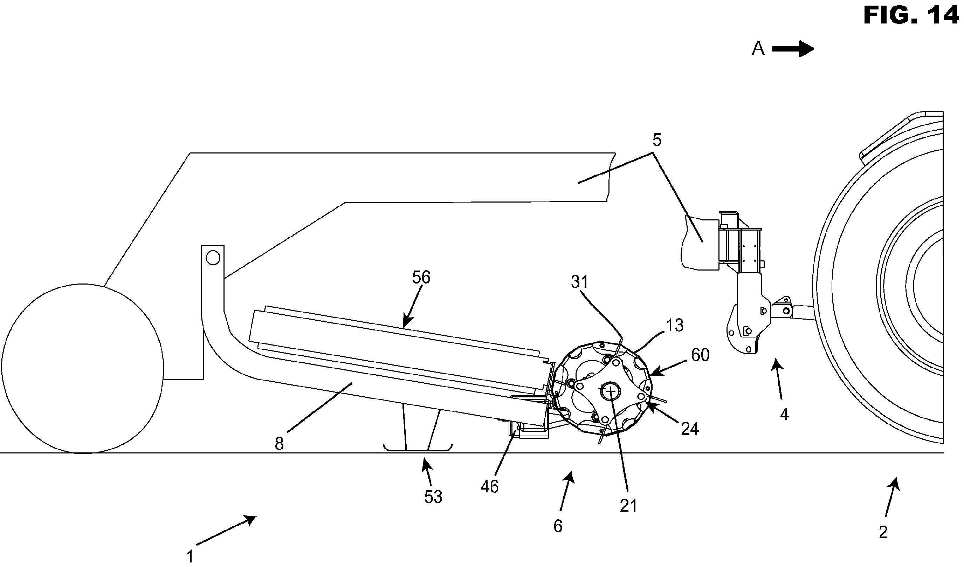

Afin de pouvoir juxtaposer plusieurs dispositifs (6) sur une même machine (1) de manière à ce que leurs premiers axes (14) respectifs soit alignés et de sorte que l'espace entre deux dispositifs (6) consécutifs soit minimal, il est envisageable de positionner la source d'entrainement (46) à l'arrière du dispositif (6), vu dans le sens de l'avance (A), ainsi que représenté sur les figures 13 et 14. La roue dentée (48) est alors entrainée par une chaîne.

L'enveloppe (13) peut être formée d'au moins une tôle (18) métallique façonnée de manière à former un cylindre s'approchant de la forme d'un cylindre circulaire droit, comme représenté sur les figures 10 à 12. Comme le montrent les figures 4, 6 et 9 notamment, l'enveloppe (13) peut être constituée de plusieurs tôles (18) pliées de telle manière qu'une fois assemblées, elles forment sensiblement un cylindre droit dont la base est un polygone régulier et dont les arrêtes sont parallèles au premier axe (14). Ces tôles (18) se chevauchent sur une zone longeant la génératrice du cylindre de l'enveloppe (13). Afin d'augmenter la résistance de l'enveloppe (13), les tôles (18) peuvent également être pliées de sorte qu'une partie forme une nervure (19) sensiblement radiale. Les tôles (18) sont de préférence en métal, mais peuvent être également constituées d'une autre matière. Une caractéristique importante du dispositif (3) réside dans le fait que l'enveloppe (13) est formée par des tôles (18) assemblées de manière démontable. Cette méthode de fabrication de l'enveloppe (13) a pour avantage d'être particulièrement simple et peu onéreuse, tout en autorisant un démontage aisé de l'enveloppe (13), respectivement d'une tôle (18), afin d'accéder facilement à l'intérieur, notamment pour le remplacement de moyens de saisie (16).

Il ressort des figures 2 et 5 qu'un flasque latéral (23) est rigidement fixé à l'enveloppe (13) à proximité de chacune de ses extrémités. Au moins un flasque central (24) est par ailleurs rigidement fixé à l'enveloppe (13), par exemple sensiblement au milieu de sa dimension longitudinale. Chaque flasque (23, 24) est par exemple une tôle métallique disposée sensiblement perpendiculairement au premier axe (14). Les flasques (23, 24) présentent des pattes (25) permettant leur fixation avec le tambour (60), plus précisément avec l'enveloppe (13). Chaque flasque latéral (23) présente par ailleurs un orifice traversé par l'arbre porteur (7).Le flasque central (24) laisse passer l'arbre central (27) par un orifice similaire. Les flasques latéraux (23) permettent ainsi d'éviter l'intrusion de végétaux à l'intérieur de l'enveloppe (13) tout en lui servant de support. Le flasque central (24) permet de transmettre la rotation du tambour (60) à la ou aux bielle(s) (40), et, le cas échéant, inversement la rotation de la ou des bielle(s) (40) au tambour (60). Le tambour (60) comporte ainsi le flasque central (24). Il comporte également les flasques latéraux (23). De préférence, la ou chaque bielle (40) est articulée directement sur le flasque central (24).

Selon le mode de réalisation représenté sur la figure 2, l'arbre porteur (7) est réalisé par deux arbres latéraux agissant comme s'ils ne faisaient qu'un, chacun disposé à une extrémité de l'enveloppe (13). L'arbre porteur (7) est ainsi divisé en deux arbres distincts l'un de l'autre et montés de sorte que leur axe respectif soient confondus. Cette réalisation évite avantageusement de faire obstacle aux pièces animées en rotation, notamment le rotor (26) et les moyens de transmission (39). Une autre solution pour l'arbre porteur (7) serait qu'il ne soit réalisé qu'en une seule pièce. Dans tous les cas, le tambour (60) est guidé en rotation, par exemple par des roulements à billes montés sur l'arbre porteur (7) à proximité des flasques latéraux (23).

Comme il ressort de la figure 4, la distance d'une extrémité (31) par rapport au contour de l'enveloppe (13) évolue au cours d'une révolution du rotor (26). Chaque extrémité (31) décrit ainsi une trajectoire (T). De préférence, tous les moyens de saisie (16) sont fixés à équidistance du deuxième axe (21). Ils sont préférentiellement tous de même dimension. La trajectoire (T) d'une extrémité (31) est un cercle centré sur le deuxième axe (21) en projection dans un plan perpendiculaire au deuxième axe (21). Dans l'exemple de réalisation illustré sur la figure 4, les moyens de saisie (16) et l'enveloppe (13) sont dimensionnés de sorte qu'au cours d'une révolution de l'enveloppe (13), chaque extrémité (31) pénètre dans l'enveloppe (13) en un point d'effacement (49) et en ressurgissent en un point de sortie (50). De cette façon, lorsque le rotor (26) est entrainé en rotation, par exemple dans le sens de rotation (R) tel qu'indiqué sur la figure 6, la trajectoire (T) comprend les phases suivantes :
- une phase d'immersion, durant laquelle l'extrémité (31) ne fait pas saillie de l'enveloppe (13), représentée sur la figure 6 par la partie hachurée d'un secteur angulaire (S) ;
- une phase de sortie du moyen de saisie (16), durant laquelle la distance entre l'extrémité (31) et l'enveloppe (13) augmente ;
- une phase de rentrée du moyen de saisie (16), durant laquelle la distance entre l'extrémité (31) et l'enveloppe (13) diminue.

Le dispositif (6) est également caractérisé en ce que, lors d'une révolution complète du rotor (26), il existe, en projection sur un plan perpendiculaire au premier axe (14), un secteur angulaire (S) où les extrémités (31) des moyens de saisie (16) ne sont pas en saillie de l'enveloppe (13). Ce secteur angulaire (S), représenté sur la figure 6, est délimité par deux plans passant par le premier axe (14). Ainsi, lorsque, en projection sur un plan perpendiculaire au premier axe (14), les extrémités (31) sont situées entre une première droite passant par le premier axe (14) et le point d'effacement (49) et une deuxième droite passant par le premier axe (14) et le point de sortie (50), les extrémités (31) sont alors situées à l'intérieur de l'enveloppe (13). Les points d'effacement (49) et de sortie (50) sont de préférence distincts l'un de l'autre. La longueur dudit secteur angulaire (S) dépend entre autre de la valeur de l'entraxe (E) qui peut être avantageusement choisie de sorte d'obtenir la dimension souhaitée du secteur angulaire (S), notamment si le diamètre de la trajectoire extérieure (T2) de l'enveloppe (13) et le diamètre de la trajectoire (T) des extrémités (31) sont définies.

Un angle de dent (α) est formé par un moyen de saisie (16) et la tangente à la trajectoire extérieure (T2) de l'enveloppe (13) lors de sa révolution autour du premier axe (14), au niveau d'un point d'intersection de l'enveloppe (13) avec le moyen de saisie (16) considéré, en projection sur un plan perpendiculaire au premier axe (14). L'angle de dent (α) est situé à l'avant du moyen de saisie (16) considéré relativement au sens de rotation (R) indiqué sur la figure 6.

Dans l'exemple de réalisation représenté sur la figure 6, lors de la phase de rentrée d'un moyen de saisie (16), l'angle de dent (α) évolue entre 85° et 105°, plus précisément entre 89° et 102°. Lors du fonctionnement, les végétaux prélevés par le dispositif (6) se trouvant sur le pourtour de l'enveloppe (13) sont majoritairement à l'avant des moyen de saisies (16). Ainsi, les moyens de saisie (16) ne pressent pas les végétaux vers l'enveloppe (13), évitant avantageusement leur introduction dans l'enveloppe (13).

De plus, la vitesse de rotation de l'enveloppe (13) et des moyens de saisie (16) étant identique, la vitesse relative des moyens de saisie (16) par rapport à l'enveloppe (13) est faible, diminuant ainsi également l'effort exercé par les moyens de saisies (16) sur les végétaux et dirigé radialement à l'enveloppe (13).

Dans le mode de réalisation de la machine (1) représenté sur la figure 14, un convoyeur transversal (56) est assemblé à l'arrière du dispositif (6) de manière à recevoir les végétaux projetés par ledit dispositif (6). Le convoyeur transversal (56) permet de déposer les végétaux en un andain dirigé parallèlement à la direction de l'avance (A). Grâce au secteur angulaire (S) où les extrémités (31) sont contenues dans l'enveloppe (13), il est possible de placer le convoyeur transversal (56) au plus proche du dispositif (6), respectivement de l'enveloppe (13), évitant avantageusement la perte de végétaux dans cet espace.

Ainsi qu'illustré sur les figures 7, 8 et 9, il est également prévu que le tambour (60) soit doté de plaques (34) de guidage des dents (17'). Ces plaques (34) présentent des ouvertures allongées (35) orientées parallèlement aux ouvertures (15) pratiquées dans l'enveloppe (13). Une ouverture allongée (35) présente une largeur très légèrement supérieure à la largeur - ou diamètre - de la dent (17') qui lui est associée. La largeur d'une ouverture allongée (35) est légèrement inférieure à la largeur d'une ouverture (15) pratiquée dans l'enveloppe (13). Les plaques (34) de guidage des dents (17') de fourche (17), et respectivement les ouvertures allongées (35), permettent ainsi de maintenir chaque dent (17') en direction de l'ouverture (15) à laquelle la dent (17') en question est associée, lors de la phase d'immersion des extrémités (31). Les plaques (34) de guidage sont montées à l'intérieur de l'enveloppe (13) et fixées avec celle-ci. Il est également possible d'assembler une ou plusieurs entretoises (36) entre chaque plaque (34) et l'enveloppe (13). Le tambour (60) comporte ainsi, le cas échéant, les entretoises (36).

Dans le mode de réalisation représenté sur les figures 2 et 3, le rotor (26) comporte des supports (28) fixés à l'arbre central (27) au moyen de moyeux (37). Les supports (28) sont des profilés en L, positionnés parallèlement au deuxième axe (21), respectivement à l'arbre central (27), et portant une pluralité de fourches (17). Chaque support (28) est ainsi associé à un rang (33). Cet assemblage présente l'avantage d'être composé de pièces standards. Lesdits supports (28) peuvent cependant avoir des formes différentes, par exemple constituer un cylindre entourant le deuxième axe (21).

Comme cela est représenté sur les figures 2, 3 et 4, il est également prévu au moins un disque (38) rigidement fixé sur l'arbre central (27), et permettant de transmettre la rotation de la ou des bielles (40) au rotor (26)., et le cas échéant, inversement du rotor (26) à la ou aux bielles (40). Le rotor (26) comporte ainsi également le disque (38) et les moyeux (37). De préférence, la ou chaque bielle (40) est articulée directement sur le disque (38). Le disque (38) est par exemple soudé sur l'arbre central (27) à proximité du milieu de la dimension longitudinale de ce dernier et perpendiculairement à celui-ci. Afin de ne pas entraver la rotation des parties tournantes telles que les moyens de saisie (16), les supports (28) s'étendent depuis le voisinage d'un flasque latéral (23) jusqu'à proximité du disque (38), respectivement du flasque central (24), sans être en contact avec ces derniers. Il ressort de la présente description que le dispositif (6) est aussi caractérisé en ce que les moyens de transmission (39) comportent également au moins un flasque central (24) rigidement fixé avec l'enveloppe (13) et au moins un disque (38) rigidement fixé avec le rotor (26). Cet agencement permet de réduire l'encombrement des moyens de transmission (39), tout en autorisant une grande plage de valeurs de l'entraxe (E). Les moyens de transmission (39) sont ainsi avantageusement contenus à l'intérieur de l'enveloppe (13).

Tel que représenté sur les figures 4 et 6, le dispositif (6) est également caractérisé en ce que le deuxième axe (21) est situé devant le premier axe (14) vu dans le sens de l'avance (A). Cette caractéristique permet que les moyens de saisie (16) fassent saillies de l'enveloppe (13) lorsqu'ils entrainent le fourrage. En effet, cela permet d'amener les végétaux préalablement prélevés du sol (B) par les moyens de saisie (16) devant le dispositif (6), de sorte à les projeter par-dessus dans une direction opposée à la direction de l'avance (A), ce afin de réduire le risque de perte de végétaux due au déplacement de la machine (1). D'autre part, dans le cas où la machine (1) serait équipée d'un dispositif de reprise, comme par exemple le convoyeur transversal (56), cette disposition des axes (14, 21) permet de rapprocher au maximum le dispositif de reprise du dispositif (6) d'entrainement des végétaux, du fait que la phase d'immersion des extrémités (31), et le secteur angulaire (S), sont alors situés à l'arrière dudit dispositif (6).

D'autre part, le deuxième axe (21) est de préférence situé plus bas que le premier axe (14), tel que représenté sur la figure 6. Ainsi, le plan (51) passant par le premier axe (14) et le deuxième axe (21) présente une inclinaison vers l'avant. L'angle entre le plan (51) et le sol (B) est de préférence compris entre 0° et 30°, et plus précisément sensiblement compris entre 15° et 25°. Une telle orientation du dispositif (6) permet de déplacer le point d'effacement (49) vers l'avant et vers le haut par rapport au sol (B), en fonction de l'orientation du plan (51), ce qui diminue le risque d'entrainer des végétaux à l'arrière de l'enveloppe (13) vers le sol (B). D'autre part, un tel positionnement du point d'effacement (49) permet d'éviter l'introduction de végétaux dans l'enveloppe (13) lorsque les moyens de saisie (16) sont en phase de rentrée.

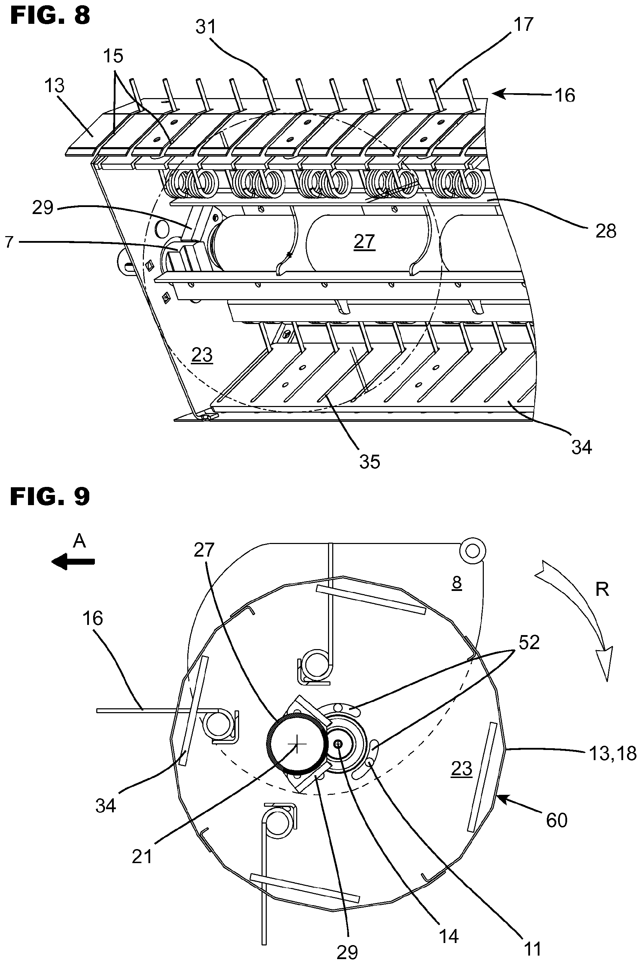

Ainsi qu'il ressort de la figure 7, l'arbre porteur (7) est maintenu fixe en rotation par rapport au bâti (8) par une clavette (9) enserrée dans un manchon (10) rainuré. Le manchon (10) est rigidement fixé au bâti (8) par l'intermédiaire d'une collerette (12) faisant partie de ce manchon (10), à l'aide de moyens de fixation (11) de préférence facilement démontable. Dans l'exemple représenté sur la figure 7, ces moyens de fixation (11) sont des vis traversant la collerette (12) du manchon (10) et le bâti (8) du dispositif (6). Dans un mode de réalisation alternatif illustré sur la figure 9, il peut être prévu dans le bâti (8) des trous oblongs circulaires (52) pour le passage des moyens de fixation (11) permettant de déplacer le rotor (26) autour du premier axe (14). Ainsi, en libérant la fixation du rotor (26) par rapport au bâti (8), il est possible de faire pivoter le rotor (26) autour du premier axe (14), entrainant notamment avec lui le bras support (29) et l'arbre porteur (7). Ce système de réglage permet ainsi d'orienter le plan (51) par rapport au sol (B). Le dispositif (6) est alors également caractérisé en ce qu'un système de réglage permet de déplacer le deuxième axe (21) autour du premier axe (14). Ce réglage permet avantageusement de déplacer angulairement le point d'effacement (49) sur la circonférence de l'enveloppe (13).

On entend dans ce document qu'une orientation « sensiblement perpendiculaire » d'un axe ou plan par rapport à un deuxième axe ou plan, qu'ils forment un angle compris entre 45° et 135°, préférentiellement entre 70° et 110°, et plus précisément encore entre 85° et 95°. De manière identique, l'orientation « sensiblement horizontal » d'un axe ou plan peut inclure un angle, entre le plan du sol (B) et l'axe ou plan considéré, compris entre -45° et 45°, préférentiellement entre - 20° et 20°, et plus précisément encore entre -5° et 5°.

Dans un autre mode de réalisation du dispositif (6) non représenté, un moyen élastiquement déformable est monté entre le bâti (8) et le rotor (26) de sorte que, lorsque le rotor (26) est soumis à un effort dirigé vers le haut, celui-ci puisse se déplacer autour du premier axe (14) et revenir à sa position initiale grâce à la force exercée par ledit moyen élastiquement déformable.

Dans un mode de réalisation différent non représenté, il peut être prévu un actionneur tel un vérin ou similaire, monté entre le bâti (8) et le rotor (26) de manière à pouvoir régler la position angulaire du rotor (26) autour du premier axe (14) lors du fonctionnement du dispositif (6).

Lorsqu'il permet de prélever des végétaux préalablement fauchés reposant sur le sol (B), ce dispositif d'entrainement peut également être appelé dispositif de ramassage ou pickup. L'invention a également pour objet un dispositif (6) d'entrainement de végétaux caractérisé en ce que le dispositif est un pickup permettant le ramassage de végétaux gisant au sol (B). Le dispositif (6) comporte alors au moins un moyen d'appui (53) au sol (B), telle qu'un patin ou une roue. Sur les figures 1 et 7, ce moyen est représenté par une roue guidée en rotation par rapport au bâti (8) et reposant sur le sol (B). Ce moyen d'appui (53) peut permettre de régler la distance entre le premier axe (14) et le sol (B). Il a également pour but de permettre au dispositif (6) de mieux suivre les potentielles dénivellations du terrain. Il peut enfin aussi permettre de transposer le dispositif (6) entre au moins la configuration de travail et une autre configuration.

L'invention a également pour objet une machine (1) agricole de récolte caractérisée en ce qu'elle comprend au moins un dispositif (6) d'entrainement de végétaux tel que décrit dans la présente description.

Une telle machine (1) est notamment destinée à être attelée, comme le montre la figure 1, à l'arrière d'un tracteur (2) ou engin agricole similaire. Les machines avec un tel dispositif d'entrainement peuvent par exemple être des presses, des ensileuses, des andaineurs, des groupeurs ou autre aérateurs d'andains. Sur ces machines, le sens de rotation (R) du rotor (26), ainsi que représenté notamment sur la figure 4, est tel que la partie les moyens de saisie (16) les plus bas se déplacent dans le sens de l'avance (A), de manière à ramasser des végétaux gisant au sol (B) et à les projeter vers l'arrière par-dessus le dispositif (6). Selon l'emploi auquel le dispositif (6) est destiné, le rotor (26) et le tambour (60) peuvent être entrainés dans un sens de rotation (R) et/ou dans le sens opposé. La machine (1) peut également être un véhicule du type automoteur, comme par exemple une moissonneuse-batteuse. Dans une moissonneuse-batteuse, le dispositif (6) peut être employé à prélever des végétaux gisant au sol (B), mais également comme 'entraineur' ou 'ameneur', couplé ou non à une vis sans fin. Dans ce dernier cas, les moyens de saisie (16) ne prélèvent pas les végétaux du sol (B), mais les saisissent en l'air afin de les rabattre et de les entrainer au sein même de la machine (1).

Bien entendu, l'invention n'est pas limitée aux modes de réalisation décrits et représentés aux dessins annexés.

## Revendications

1. Dispositif (6) d'entrainement de végétaux destiné à être assemblé sur une machine (1) agricole et comprenant notamment :
- un tambour (60) qui est articulé avec un bâti (8) autour d'un premier axe (14) sensiblement horizontal et qui comprend une enveloppe (13) sensiblement cylindrique qui présente des ouvertures (15) par lesquelles, des moyens de saisie (16) destinés à entrainer des végétaux situés à l'extérieur de l'enveloppe (13) sont aptes à saillir,
- un rotor (26) sur lequel sont rigidement fixés les moyens de saisie (16), et apte à être entrainé en rotation par rapport au bâti (8) autour d'un deuxième axe (21) dirigé sensiblement parallèlement au premier axe (14) et distinct de celui-ci, où, lors du fonctionnement du dispositif (6), le deuxième axe (21) est fixe par rapport au premier axe (14),
- et des moyens de transmissions (39) du mouvement de rotation,
***caractérisé en ce que**,*
les moyens de transmission (39) du mouvement de rotation comprennent au moins une bielle (40) articulée au tambour (60) d'une part et au rotor (26) d'autre part.

2. Dispositif (6) d'entrainement de végétaux selon la revendication 1, ***caractérisé en ce que*** les moyens de transmission (39) comprennent une pluralité de bielles (40) articulées au tambour (60) d'une part et articulées au rotor (26) d'autre part.

3. Dispositif (6) d'entrainement de végétaux selon l'une des revendications 1 ou 2, ***caractérisé en ce que*** la ou chaque bielle (40) est directement articulée avec le tambour (60) autour d'un troisième axe (44) sensiblement parallèle au premier axe (14).

4. Dispositif (6) d'entrainement de végétaux selon l'une des revendications 1 à 3, ***caractérisé en ce que*** la ou chaque bielle (40) est directement articulée avec le rotor (26) autour d'un quatrième axe (45) sensiblement parallèle au deuxième axe (21).

5. Dispositif (6) d'entrainement de végétaux selon les revendications 3 et 4, ***caractérisé en ce que*** le premier axe (14) est situé à égale distance de chaque troisième axe (44), et **en ce que** le deuxième axe (21) est situé à égale distance de chaque quatrième axe (45).

6. Dispositif (6) d'entrainement de végétaux selon l'une des revendications 3 à 5, ***caractérisé en ce que*** au moins deux troisièmes axes (44) sont diamétralement opposés par rapport au premier axe (14).

7. Dispositif (6) d'entrainement de végétaux selon l'une des revendications 4 à 6, ***caractérisé en ce que*** la distance minimale entre l'enveloppe (13) et le premier axe (14) est inférieure à la somme de l'entraxe (E) avec la distance séparant le deuxième axe (21) du quatrième axe (45).

8. Dispositif (6) d'entrainement de végétaux selon l'une des revendications 1 à 7, ***caractérisé en ce que*** les moyens de saisie (16) sont fixés rigidement avec le rotor (26) de sorte que, en projection sur un plan perpendiculaire au deuxième axe (21), quels que soient les deux moyens de saisies (16) considérés, l'angle entre ces deux moyens de saisie (16) est constant.

9. Dispositif (6) d'entrainement de végétaux selon l'une des revendications précédentes, ***caractérisé en ce que*** les moyens de saisie (16) sont constitués par une multitude de fourches (17) à deux dents (17') et dont la base (30) forme des spires.

10. Dispositif (6) d'entrainement de végétaux selon l'une des revendications 1 à 9, ***caractérisé en ce qu'***il peut être agencé de sorte que le tambour (60) entraine le rotor (26) ou inversement.

11. Dispositif (6) d'entrainement de végétaux selon l'une des revendications 1 à 10, ***caractérisé en ce que*** l'enveloppe (13) est formée par des tôles (18) assemblées de manière démontable.

12. Dispositif (6) d'entrainement de végétaux selon l'une des revendications 1 à 11 ***caractérisé en ce que*** le deuxième axe (21) est situé devant le premier axe (14) vu dans le sens de l'avance (A).

13. Dispositif (6) d'entrainement de végétaux selon l'une des revendications 1 à 12 ***caractérisé en ce qu**'*un système de réglage permet de déplacer le deuxième axe (21) autour du premier axe (14).

14. Dispositif (6) d'entrainement de végétaux selon l'une des revendications 9 à 13, ***caractérisé en ce que*** chaque dent (17') est associée à une ouverture (15) et chaque ouverture (15) est associée à une dent (17') de sorte que le l'enveloppe (13) ne présente aucun autre orifice.

15. Machine (1) agricole de récolte ***caractérisée en ce qu'***elle comprend au moins un dispositif (6) d'entrainement de végétaux tel que décrit dans l'une des revendications 1 à 14.

## Patentansprüche

1. Pflanzenbeförderungsvorrichtung (6), die dazu bestimmt ist, auf einer landwirtschaftlichen Maschine (1) angebracht zu werden und mit insbesondere:
- einer Walze (60), die an einem Gestell (8) um eine erste im Wesentlichen horizontale Achse (14) angelenkt ist und die eine im Wesentlichen zylindrische Hülse (13) umfasst, die Öffnungen (15) aufweist, durch welche Greifmittel (16), die dazu bestimmt sind, sich außerhalb der Hülse (13) befindliche Pflanzen zu befördern, hinausragen können,
- einem Rotor (26), auf dem die Greifmittel (16) starr befestigt sind und der in Bezug auf das Gestell (8) um eine zweite Achse (21), die im Wesentlichen parallel zu der ersten Achse (14) ausgerichtet ist und sich von dieser unterscheidet, in Drehung versetzt werden kann, wobei während des Betriebs der Vorrichtung (6) die zweite Achse (21) in Bezug auf die erste Achse (14) fest ist,
- und Übertragungsmitteln (39) der Drehbewegung,
***dadurch gekennzeichnet, dass***
die Übertragungsmittel (39) der Drehbewegung mindestens eine Stange (40) umfassen, die einerseits an der Walze (60) und andererseits am Rotor (26) angelenkt ist.

2. Pflanzenbeförderungsvorrichtung (6) nach Anspruch 1, ***dadurch gekennzeichnet, dass*** die Übertragungsmittel (39) eine Vielzahl von Stangen (40) umfassen, die einerseits an der Walze (60) angelenkt sind und andererseits am Rotor (26) angelenkt sind.

3. Pflanzenbeförderungsvorrichtung (6) nach einem der Ansprüche 1 oder 2, ***dadurch gekennzeichnet, dass*** die oder jede Stange (40) direkt mit der Walze (60) um eine zu der ersten Achse (14) im Wesentlichen parallele dritte Achse (44) angelenkt ist.

4. Pflanzenbeförderungsvorrichtung (6) nach einem der Ansprüche 1 bis 3, ***dadurch gekennzeichnet, dass*** die oder jede Stange (40) direkt mit dem Rotor (26) um eine zu der zweiten Achse (21) im Wesentlichen parallele vierte Achse (45) angelenkt ist.

5. Pflanzenbeförderungsvorrichtung (6) nach den Ansprüchen 3 und 4, ***dadurch gekennzeichnet, dass*** sich die erste Achse (14) in gleichem Abstand von jeder dritten Achse (44) befindet, und dadurch, dass sich die zweite Achse (21) in gleichem Abstand von jeder vierten Achse (45) befindet.

6. Pflanzenbeförderungsvorrichtung (6) nach einem der Ansprüche 3 bis 5, ***dadurch gekennzeichnet, dass*** mindestens zwei dritte Achsen (44) in Bezug auf die erste Achse (14) diametral entgegengesetzt sind.

7. Pflanzenbeförderungsvorrichtung (6) nach einem der Ansprüche 4 bis 6, ***dadurch gekennzeichnet, dass*** der Mindestabstand zwischen der Hülse (13) und der ersten Achse (14) kleiner ist als die Summe des Achsabstands (E) mit dem Abstand, welcher die zweite Achse (21) von der vierten Achse (45) trennt.

8. Pflanzenbeförderungsvorrichtung (6) nach einem der Ansprüche 1 bis 7, ***dadurch gekennzeichnet, dass*** die Greifmittel (16) starr mit dem Rotor (26) befestigt sind, sodass, in Projektion auf eine zur zweiten Achse (21) senkrechte Ebene, unabhängig von den zwei betroffenen Greifmittel (16), der Winkel zwischen diesen zwei Greifmitteln (16) konstant ist.

9. Pflanzenbeförderungsvorrichtung (6) nach einem der vorstehenden Ansprüche, ***dadurch gekennzeichnet, dass*** die Greifmittel (16) von einer Vielzahl von Gabeln (17) mit zwei Zinken (17') gebildet werden, deren Sockel (30) Windungen bildet.

10. Pflanzenbeförderungsvorrichtung (6) nach einem der Ansprüche 1 bis 9, ***dadurch gekennzeichnet, dass*** sie so angeordnet sein kann, dass die Walze (60) den Rotor (26) antreibt oder umgekehrt.

11. Pflanzenbeförderungsvorrichtung (6) nach einem der Ansprüche 1 bis 10, ***dadurch gekennzeichnet, dass*** die Hülse (13) von Blechen (18) gebildet wird, die zerlegbar zusammengebaut sind.

12. Pflanzenbeförderungsvorrichtung (6) nach einem der Ansprüche 1 bis 11, ***dadurch gekennzeichnet, dass*** sich die zweite Achse (21) vor der ersten Achse (14) befindet, in der Vorschubrichtung (A) gesehen.

13. Pflanzenbeförderungsvorrichtung (6) nach einem der Ansprüche 1 bis 12, ***dadurch gekennzeichnet, dass*** ein Einstellsystem ermöglicht, die zweite Achse (21) um die erste Achse (14) zu bewegen.

14. Pflanzenbeförderungsvorrichtung (6) nach einem der Ansprüche 9 bis 13, ***dadurch gekennzeichnet, dass*** jedem Zinken (17') eine Öffnung (15) zugeordnet ist und jeder Öffnung (15) ein Zinken (17') zugeordnet ist, sodass die Hülse (13) keine andere Mündung aufweist.

15. Landwirtschaftliche Erntemaschine (1), ***dadurch gekennzeichnet, dass*** sie mindestens eine Pflanzenbeförderungsvorrichtung (6), wie in einem der Ansprüche 1 bis 14 beschrieben, umfasst.

## Claims

1. Plant conveying device (6) intended to be mounted on an agricultural machine (1) and including in particular:
- a drum (60) that is articulated to a frame (8) around a first substantially horizontal axis (14) and which includes a substantially cylindrical casing (13) that has openings (15) through which seizing means (16) intended to convey plants situated outside the casing (13) are able to protrude,
- a rotor (26) onto which the seizing means (16) are rigidly fastened and that is able to be driven in rotation relative to the frame (8) around a second axis (21) directed substantially parallel to the first axis (14) and separate from it, in which, when the device (6) is operated, the second axis (21) is fixed relative to the first axis (14),
- and rotational movement transmission means (39),
***characterized in that,***
the rotational movement transmission means (39) include at least one rod (40) articulated to the drum (60) on one hand and to the rotor (26) on another hand.

2. Plant conveying device (6) according to claim 1, ***characterized in that*** the transmission means (39) include multiple rods (40) articulated to the drum (60) on one hand and to the rotor (26) on another hand.

3. Plant conveying device (6) according to one of the claims 1 or 2, ***characterized in that*** the or each rod (40) is directly articulated to the drum (60), around a third axis (44) substantially parallel to the first axis (14).

4. Plant conveying device (6) according to one of the claims 1 to 3, ***characterized in that*** the or each rod (40) is directly articulated to the rotor (26) around a fourth axis (45) substantially parallel to the second axis (21).

5. Plant conveying device (6) according to claims 3 and 4, ***characterized in that*** the first axis (14) is situated at an equal distance from each third axis (44) and **in that** the second axis (21) is situated at an equal distance from each fourth axis (45).

6. Plant conveying device (6) according to one of the claims 3 to 5, ***characterized in that*** at least two third axes (44) are diametrically opposed relative to the first axis (14).

7. Plant conveying device (6) according to one of the claims 4 to 6, ***characterized in that*** the minimum distance between the casing (13) and the first axis (14) is less than the sum of the interaxis distance (E) and the distance between the second axis (21) and the fourth axis (45).

8. Plant conveying device (6) according to one of the claims 1 to 7, ***characterized in that*** the seizing means (16) are rigidly fastened to the rotor (26) such that, projected along a plane perpendicular to the second axis (21), irrespective of the two seizing means (16) in question, the angle between these two seizing means (16) is constant.

9. Plant conveying device (6) according to one of the previous claims, ***characterized in that*** the seizing means (16) are comprised of multiple forks (17) with two teeth (17') and of which the base (30) forms coils.

10. Plant conveying device (6) according to one of the claims 1 to 9, ***characterized in that*** it can be arranged in such a way that the drum (60) drives the rotor (26) or vice versa.

11. Plant conveying device (6) according to one of the claims 1 to 10, ***characterized in that*** the casing (13) is formed of sheets (18) assembled in a removable manner.

12. Plant conveying device (6) according to one of the claims 1 to 12, ***characterized in that*** the second axis (21) is situated in front of the first axis (14) as viewed in the direction of advance (A).

13. Plant conveying device (6) according to one of the claims 1 to 12, ***characterized in that*** an adjustment system makes it possible to move the second axis (21) around the first axis (14).

14. Plant conveying device (6) according to one of the claims 9 to 13, ***characterized in that*** each tooth (17') is associated with an opening (15) and each opening (15) is associated with a tooth (17') such that the casing (13) does not have any other hole.

15. Agricultural harvesting machine (1) **characterized in that** it includes at least one plant conveying device (6) as described in one of the claims 1 to 14.
